# EUROPEAN PATENT APPLICATION

(11) **EP 3 415 470 A1**
(43) Date of publication of application: **19.12.2018**
(21) Application number: 17401062.9
(22) Date of filing: 14.06.2017
(51) Int. Cl.: C01G 45/12

(54) **BORON-DOPED SODIUM-ION CATHODE MATERIAL, METHOD OF PRODUCING SAME AND ITS USE**

(71) Applicant: Karlsruher Institut für Technologie, 76131 Karlsruhe (DE)
(72) Inventor: Vaalma, Christoph, 89075 Ulm (DE); Buchholz, Daniel, 89075 Ulm (DE); Passerini, Stefano, 89073 Ulm (DE)

(57) **Abstract**

The invention describes a cathode material comprising at least one layered sodium transition metal oxide having the formula NaₓMe1_{y}Me2_{z}B_{b}Oₙ, wherein 0.5<x, and Me1 is Mn or a mixture of Mn and at least one metal taken amongst the elements Fe, Ni, Co and 0.7≤y≤0.97, and Me2 is at least one metal taken amongst the elements Li, Mg, Al, K, Ca, Ti, Cr, Cu, Zn, Zr, Sn and 0≤z≤0.3, and 0.03≤b≤0.25, and (b+z)≤0.3 and 1.9≤n≤2.1., its method of preparation and use of the cathode material.

The cathode material allows sodium ions to reversibly intercalate between the transition metal layers and reveals a good electrochemical performance in a stable potential window of standard non-aqueous electrolytes.

## Description

The invention is related to a cathode material for sodium based electrochemical energy storage devices, a method for preparing it and its use as well as a battery containing a cathode material according to the invention.

The state of the art concerning battery active materials predominantly consists of lithium-based compounds, which share the same working principle.

Currently, lithium-ion batteries appear to be the most promising technology for electrochemical energy storage and for promoting the implementation of renewable energies. However, all lithium-based systems have one drawback, which is the limited and geographically unevenly distributed availability of lithium resources. In case of a strong increase of demand for lithium, e.g. if lithium-ion batteries will be used for large-scale applications like electric vehicles, a shortage of lithium is likely to occur, leading to a strong price increase.

Sodium-ion batteries might be an interesting technology, especially in case of a shortage of lithium, since sodium resources are cheap, highly abundant and available in almost every country in the world (in forms of rock, sea salt, brine). However, it has to be considered that the redox potential of sodium is higher than that of lithium (about 0.3 V vs. the Standard Hydrogen Electrode) and that sodium is heavier (23 g mol⁻¹ vs. 7 g mol⁻¹ for lithium), which leads to a decreased specific energy density. Nevertheless, this lower specific energy is partially balanced by the use of aluminium as anode current collector in sodium-ion batteries, since sodium does not alloy with it at low potentials. Thus, the heavier and more expensive copper current collector, which is necessarily used in lithium-ion batteries, can be replaced. This is consequently not only leading to reduced weight but also cost.

Moreover, most but not all of the currently discussed lithium-ion cathode materials are dependent on the use of nickel and/or cobalt as part of the active material, making them costly, toxic, environmentally unfriendly and limited in raw-materials supply.

Therefore, the sodium-ion battery is regarded as a promising candidate for efficient energy storage and especially low-cost applications, e.g. stationary energy storage. In fact, a strong increase in scientific publications on sodium-ion batteries is registered since about 2010.

As representatives for cathode materials, several materials are discussed in the following:
Kumakura et. al, Angewandte Chemie International Edition (2016), 55(41), 12760-12763, describe the synthesis of distorted Na_{2/3}MnO₂ and discuss its electrochemical properties in comparison with the undistorted analogue. It delivers more than 200 mAhg⁻¹ and demonstrates a better electrochemical performance compared to the undistorted analogue. However, the depicted material properties at elevated discharge current rates are unsatisfactory, even at low charge rates, and a relatively wide potential window is required.

Buchholz et. al, Journal of Power Sources (2015), 282, 581-585, showed a magnesium doping of a sodium-based cathode material for the improved electrochemical behaviour of P-type layered oxides. The publication describes NaₓMg_{0.11}Mn_{0.89}O₂ as P2-type structure and its use as cathode material. It is shown that a magnesium content of 11 at.% in the MO₂-layer leads to a smoothing of the potential profile, high coulombic efficiencies and a stable long-term cycling behaviour. Clément et al., Energy & Environmental Science (2016), 9(10), 3240-3251, published a similar magnesium-doped NaₓMnO₂, showing good capacities at elevated discharge rates in a narrow potential range but still at low charge rates. A very similar material is further described in WO2014132174 A1.

Also boron-doped cathode materials are already known. EP 2879215 A1 discusses a boron-doped lithium-rich nickel cobalt manganese oxide. The boron doping results in a higher capacity retention upon cycle life.

In US 7529014 B2, boron is used to increase the mobility of charge carriers in a polyanionic compound, which is a different material class than layered compounds. In US6497854 B2, US6998069 B1 and US2016181605 A1 boron doping results in a higher capacity retention upon cycle life.

Velikokhatnyi et al., Materials Science and Engineering: B (2006), 128(1), 115-124, published boron-doped NaMnO₂ and showed that boron stabilizes the monoclinic structure of the compound. Therefore, the boron-doped NaMnO₂ compound seems very suitable as a precursor material for a boron-doped lithium cathode material LiMnO₂.

Hu et al., Advanced Science (2016), 3(12), published boron-substituted polyanionic Na₃V₂P₃₋ₓBₓO12 (0≤x≤1) as a stable cathode material for sodium-ion batteries.

The key point for a desired sodium-ion cathode material is the combination of high capacities, also at elevated charge and discharge current rates, a sufficiently high average working potential, high density, high cycling stability/reversibility/ efficiency, a facile synthesis and the use of low-cost materials.

All sodium-based cathode materials of the state of the art show at least one drawback.

The aim of this invention is to provide a secondary sodium-based cathode material fulfilling all requirements to be a proper substitute for lithium-based cathode materials.

In particular, it should provide high capacities at elevated current rates in a narrow potential range in which the electrolyte is stable.

Furthermore, a method for preparing the cathode material and a rechargeable sodium-ion battery containing the cathode material should be indicated.

This objective is achieved in respect of the secondary sodium-based cathode material by the features of claim 1, in respect of a preferred preparative method by the steps of claim 8, in respect of the use of the cathode material by the features of claim 9 and in respect of a rechargeable sodium-ion battery by the features of claim 10. The dependent claims each describe advantageous embodiments of the invention. Therein, the respective optional features may be realized in an isolated fashion as well as in any arbitrary feasible combination, as the skilled person will realize. It is emphasized here that the scope of the invention is not restricted by the preferred embodiments.

Boron doping is known to be used in lithium-ion compounds, resulting in a better capacity retention upon cycle numbers (cycle life), but does not show any significant capacity increase.

The invention provides a cathode material which allows sodium ions to reversibly intercalate between the transition metal layers and which reveals a good electrochemical performance.

The cathode material reveals an excellent electrochemical performance in a stable potential window of standard nonaqueous electrolytes. In one embodiment, the cathode material also depicts little or no toxic metals like nickel, making it more or very environmentally friendly.

Other sodium-ion cathode materials are able to show comparable electrochemical performances but comprise considerable amounts of toxic metals like cobalt or nickel and/or need a much wider potential window, which stresses the material and the electrolyte and/or show a much more reduced cycle life.

We propose a secondary cathode material comprising at least one layered sodium transition metal oxide having the formula

NaₓMe1_{y}Me2_{z}B_{b}Oₙ Formula I

wherein 0.5<x, and Me1 is Mn or a mixture of Mn and at least one metal taken amongst the elements Fe, Ni, Co and 0.7≤y≤0.97, and Me2 is at least one metal taken amongst the elements Li, Mg, Al, K, Ca, Ti, Cr, Cu, Zn, Zr, Sn and 0≤z≤0.3, and 0.03≤b≤0.25, and (b+z)≤0.3 and 1.9≤n≤2.1.

In a preferred embodiment, the sum of the amounts of Me1, Me2 and B is 1, i.e. y+z+b=1.

The metal layers comprising Me1, Me2 and/or B in the layered metal oxide are denoted as transition metal layers, as the main metals Me1 are transition metals. B as well as Me2 can be non-transition metals and act preferably as dopants in the structure.

The variable x defines the amount of sodium which is embodied in the cathode material by synthesis. As a result, the cathode contains the sodium reservoir which can be cycled within a battery and a high Na/(Me1+Me2+B) ratio is desired to keep the required amount of cathode material as low as possible.

Increasing x is possible by optimizing the heat treatment conditions.

In a preferred embodiment, the amount x of sodium is greater than 0.63 (x>0.63).

The variable b defines the amount of boron (B). In the composition of the cathode material, the content of boron ranges from b=0.030 to b=0.250. In the preferred cathode material, the content of boron ranges from b=0.070 to b=0.225. This content is preferred because it shows a combination of multiple favourable aspects: An increase of capacity combined with a comparably low mass of boron compared to the other metal Me1, an increased performance at elevated current rates and a narrowed working potential range. The combination of all these aspects is desired and achieves best in the range between 0.100≤b≤0.200.

Me1 defines either Mn or a mixture of Mn with at least one metal taken amongst the elements Fe, Ni or Co, or a mixture of Mn with at least two of the metals taken amongst the elements Fe, Ni or Co. The variable y defines the amount of Me1 in the layered sodium-ion compound and is set to 0.70≤y≤0.97. Me1 is redox-active. A minimum amount y of 0.70 ensures the availability of a sufficient amount of redox-active material for a fully functioning battery. Preferred is the addition of a Me1 content in an amount of y=1-b.

In a preferred embodiment Me1 = Mn. Manganese is preferred because of its high valence, low cost and low toxicity. Using Mn only as Me1 results in a very environmentally friendly battery as the use of toxic components is reduced to a minimum.

Boron as a dopant is also working beneficially in compounds with reduced manganese content. In fact, manganese-based compounds are often found with nickel and/or cobalt as alternative elements, due to the similar ionic radii and the often stated effect of improving the current rate capability and average working potential by nickel and cobalt. Also manganese in combination with Fe is known to form P2-Na_{2/3}Fe_{0.5}Mn_{0.5}O₂ and O3-Na_{1.0}Fe_{0.5}Mn_{0.5}O₂ with reported capacities above 175 mAh g⁻¹ and enables potential cost reductions by the use of lower-cost raw material for the iron content.

Me2 defines other elements, also referred to as dopants, in the layered sodium-ion compound, z defines the amount of Me2. Me2 is in one embodiment redox active and in another embodiment not redox active. Preferably, the additional dopants are taken amongst the elements Li, Mg, Al, K, Ca, Ti, Cr, Cu, Zn, Zr, Sn. More preferably, they are taken amongst the elements Mg, Al, Ca, Ti, Cr, Cu, Zn. The cathode material can include either none, one or a mixture of more than one dopant from the list. Additional doping with elements mentioned as Me2 potentially reduces the preferred minimum content of boron. Therefore, when adding dopants Me2, lower boron values are preferred. The combined ratio of Me2 and boron in the cathode material (b+z) should be less than 0.30 as the ratio of Me1, the redox-active cation, is reduced when using higher (b+z) contents, thus reducing the reversible capacity.

The oxygen stoichiometry n includes values of 1.9-2.1.

The novelty of this invention is the surprisingly high specific capacity up to charge and discharge rates of 500 mA g⁻¹. The high current-rate capability is especially surprising in the range of 4.0-2.0 V vs. Na/Na⁺, which is a very stable potential range for the standard organic electrolyte, used in this type of batteries. This effect is achieved by the use of boron in the layered sodium transition metal oxide cathode material.

It has to be pointed out that the cathode material of this invention comprises several crystal phases instead of a single phase system. The proposed cathode material is a sodium transition metal oxide with at least two distinguished coexisting phases by synthesis. It is known that multi-phase compounds can be synthesized with different variants of phases and combinations thereof by different synthesis conditions. It is further known, that these multi-phase compounds can have superior properties than simple mixtures of phase pure species.

The synthesis consists of a facile and relatively simple solid-state heating of the corresponding educts, which are low-cost commodities. Additionally, the conducted synthesis method is not dependent on complicated steps like quenching of the high-temperature calcined material in liquid nitrogen.

The cathode material can be obtained, e.g., via co-precipitation, sol-gel or solid-state procedures. Co-precipitation leads to an optimal mixture of the material.

In order to make it simple, decrease the costs and assumingly easy to scale up, the solid-state route is preferred. In general, the educts should be mixed at first and then heated for a certain time in the range between 600-1100 °C. All additional steps are intended to improve the homogeneity of the sample.

However, in order to maintain a sufficiently good reproduction, the educts should be repeatedly mixed via, e.g., ball milling and calcined at a sufficiently high temperature, in one embodiment the temperature is more than 350 °C to decompose the educts like acetates, nitrates and others, preferably 375 °C. The material should then be mixed again via ball milling to mix the intermediate oxides and finally annealed to obtain a sufficiently high crystallinity and homogeneity of the product. The final high-temperature annealing is usually conducted between 600-1100°C. After annealing, the material has to be further treated mechanically to obtain the requested form of the product, for example adjusting the particle size by grinding. It has to be mentioned that additional steps like quenching in liquid nitrogen are not necessary. Cooling down the product is sufficient. In one preferred embodiment, cooling the samples down slowly within several hours in the furnace is sufficient.

A method for preparing the proposed cathode material comprises at least one step of grinding of stoichiometric amounts of the metals to yield a ground material and afterwards heating at temperatures between 600-1100°C.

For example, the educts are ground in, e.g., a ball mill to ensure a sufficient mixing of the educts and afterwards calcined at 300-700 °C to yield the desired mixture of intermediate oxides. The mixture is then converted to pellets and then annealed at a temperature between 600 and 1100 °C.

The proposed cathode material is to be used in a rechargeable sodium-ion battery. The sodium-ion cathode materials are applied to an electrode and assembled with an anode and an electrolyte into a cell.

As the electrolyte, sodium salts like sodium hexafluorophosphate (NaPF₆), sodium perchlorate (NaClO₄), sodium tetrafluoroborate (NaBF₄), sodium bis(fluorosulfonyl)imide (NaFSI) and/or sodium bis(trifluoromethanesulfonyl)imide (NaTFSI), dissolved in an organic solvent which comprises one or more components of ethylene carbonate (EC), propylene carbonate (PC), dimethyl carbonate (DMC), dimethoxyethane (DME) among others, are typically used. It is further known that additives like fluoroethylene carbonate (FEC) can have beneficial effect in electrolytes. Using 0.9-1 M NaPF₆ in PC is recommended, but there are other electrolyte compositions known in the state of the art that are suitable for layered cathode materials.

A cathode electrode typically consists of an aluminium foil coated with the cathode material and a binder as well as a conductive additive.

In one embodiment, the electrodes are prepared by mixing 5 wt% binder, preferably polyvinylidene difluoride (PVdF), 10 wt% conductive carbon black as additive to increase the electrode's electric conductivity and N-methyl-2-pyrrolidone (NMP) as solvent with 85 wt% of the cathode material. The resulting slurry is applied to an aluminium foil followed by a drying procedure to remove the solvent.

Aluminium foil can be used as anode electrode current collector since sodium, in contrast to lithium, does not alloy with aluminium at low potentials.

The proposed rechargeable sodium-ion battery comprises at least one anode and at least one cathode, wherein at least one cathode comprises the proposed cathode material.

Active materials for batteries are highly relevant for the present and future field of electrochemical energy storage. Beside the already existent applicants like car manufacturers and producers of portable electronics, large-scale energy storage will most possibly be of high importance in the future due to the global development. The described cathode material with its special qualities fits well to the requirements of these applications and can therefore be one part of the solution.

The invention is illustrated below with the aid of the working examples and the figures. The individual figures show:
- Fig. 1: X-ray diffractogram of Na_{0.64}B_{0.11}Mn_{0.89}O_{2.}
- Fig. 2: X-ray diffractogram of Na_{0.64}B_{0.11}Mn_{0.89}O₂ at magnified scale. Reference compounds with reported diffraction peaks are shown below.
- Fig. 3: cyclic voltammogram at 0.1 mV s⁻¹ between 4.0-2.0 V vs. Na/Na⁺ for Na_{0.64}B_{0.11}Mn_{0.89}O₂.
- Fig. 4: potential profiles for 5 cycles at 10 mA g⁻¹ (for charge and discharge) between 4.0-2.0 V vs. Na/Na⁺ for Na_{0.64}B_{0.11}Mn_{0.89}O₂.
- Fig. 5: potential profiles for 75 cycles at 40 mA g⁻¹ (for charge and discharge) between 4.0-2.0 V vs. Na/Na⁺ for Na_{0.64}B_{0.11}Mn_{0.89}O₂.
- Fig. 6: cycling at different current rates, each for 5 cycles, at 40, 100, 200, 500, 1000 and 1500 mA g⁻¹ during charge and discharge between 4.0-2.0 V vs. Na/Na⁺. The according potential profiles represent cycle 4, 9, 14, 19, 24, 29 and 33, respectively.
- Fig. 7: the discharge capacity depending on the content of boron (at% (excluding sodium and oxygen)) in Na_{2/3}Mn₁₋ₓBₓO₂.

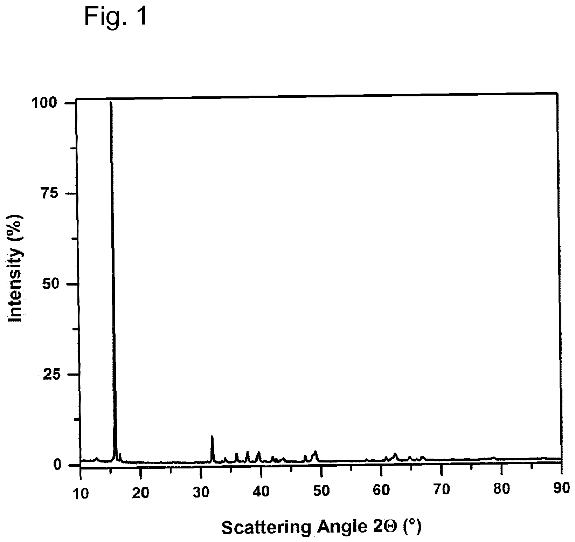

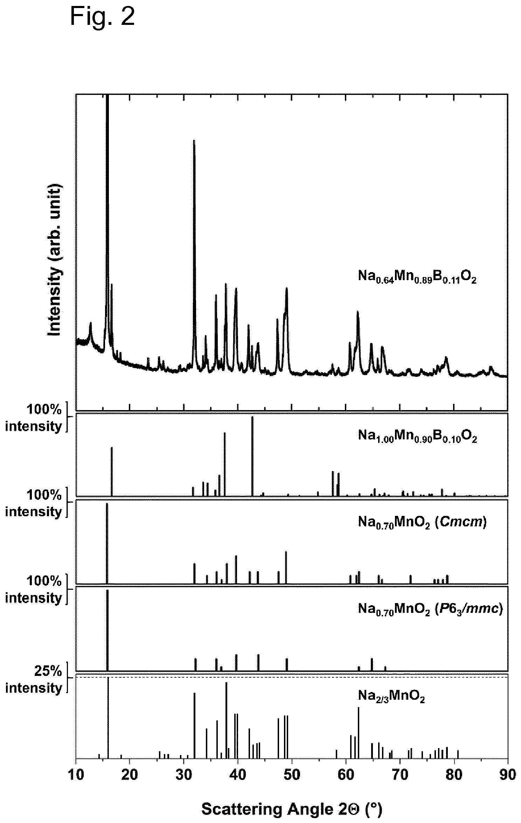

Fig. 1 depicts the complete diffractogram of Na_{0.64}B_{0.11}Mn_{0.89}O₂, which is shown in Fig. 2 as an excerpt.

Fig. 2 depicts the multi-phase character of Na_{0.64}B_{0.11}Mn_{0.89}O₂. The space groups of the reference compounds are as follows: Na_{1.00}Mn_{0.9}B_{0.10}O₂ (*C*2/*m*, monoclinic, PDF 01-075-3247), Na_{0.70}MnO₂ (*Cmcm*, orthorhombic, PDF 00-027-0752), Na_{0.70}MnO₂ (*P*6₃/*mmc*, hexagonal, PDF 00-027-0751) and Na_{2/3}MnO₂ [*C*2/*c*, monoclinic as main phase, Solid State Ionics (1999), 126(1), 3-24].

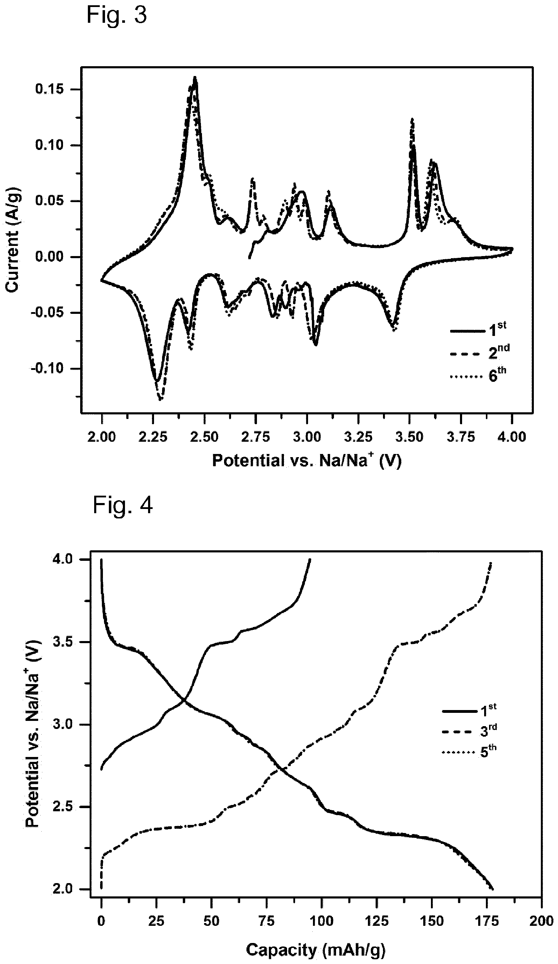

Fig. 3 depicts the cyclic voltammogram (CV) of Na_{0.64}B_{0.11}Mn_{0.89}O₂. The good reversibility is depicted by the overlapping loops.

Fig. 4 underlines the reversibility of the cycling of Na_{0.64}B_{0.11}Mn_{0.89}O₂, the multiphase reaction by the multistep potential profile and allows to evaluate the average working potential of the compounds.

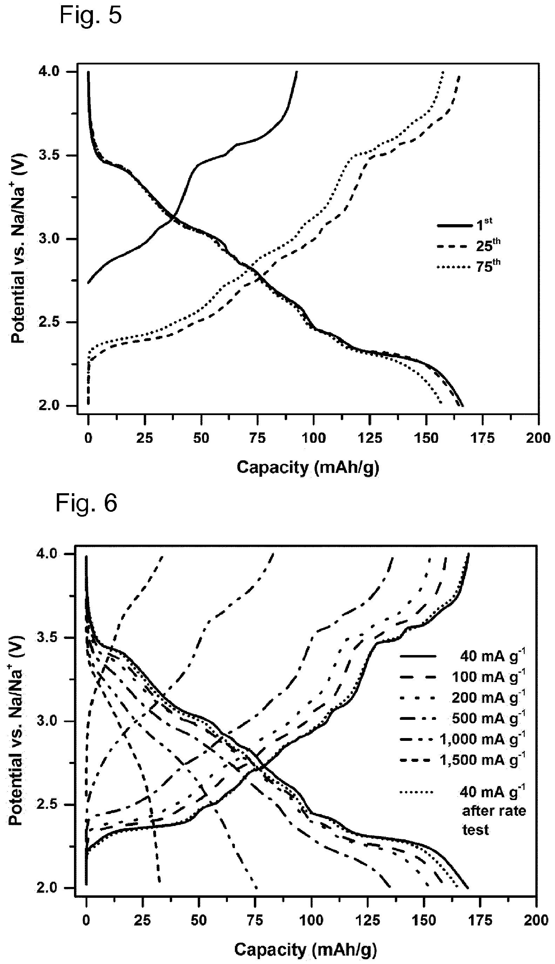

Fig. 5 depicts generally the same as Fig. 4 but at an increased current rate and shows higher cycle numbers.

Fig. 6 proves the excellent current-rate capability with a high capacity retention and cycling stability at currents up to 500 mA g⁻¹. The stability is demonstrated by the almost unchanged potential profile at 40 mA g⁻¹, even after cycling at extreme currents such as 1,500 mA g⁻¹.

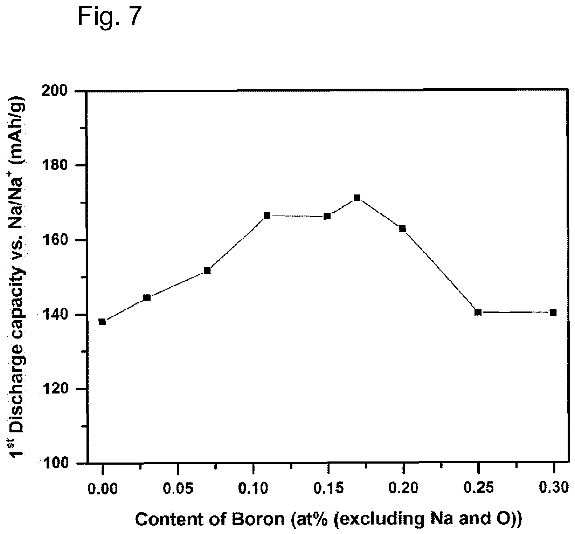

Fig. 7 indicates the maximum of beneficial boron doping in sodium manganese oxide with sodium equivalents of 2/3. The most beneficial boron content is identified to be Na_{2/3}Mn₁₋ₓBₓO₂ with 0.250≥x≥0.100.

As working examples, boron doped layered sodium-based transition metal oxides were prepared and used as cathode material.

### Synthesis of the cathode material

### Co-precipitation synthesis

Layered sodium transition metal oxides were obtained via a modified co-precipitation method. A stoichiometric amount of sodium carbonate monohydrate (Sigma-Aldrich, ≥99.5%) was dissolved in water and an aqueous solution with stoichiometric ratios of salts [e.g. manganese (II) acetate tetrahydrate (Sigma- Aldrich, ≥99%), boric acid (Alfa Aesar, 99%), aluminium 2-ethylhexanoate (Strem, ≥96%), the selected elements depend on the aimed individual compound] was added dropwise under stirring. Then, the water was removed by rotary evaporation and the residue calcined in a box furnace in air at 375 °C in order to decompose the precursor mixture to oxides. The obtained product was ground with mortar and pestle and annealed in a final step in a box furnace in air at 900 °C for 6 hours and furnace cooled. The powder was then ground with mortar and pestle, screened over a 45 µm sieve and used without further treatment.

### Solid-state synthesis

Layered sodium transition metal oxides were obtained via consecutive grinding, ball milling, pressing into a pellet and calcination/annealing of the educts. In detail, stoichiometric ratios of salts [e.g. sodium carbonate monohydrate (Sigma-Aldrich, ≥99.5%), manganese (II) acetate tetrahydrate (Sigma-Aldrich, ≥99%), boric acid (Alfa Aesar, 99+%), aluminium 2-ethylhexanoate (Strem, ≥96%), the selected elements depend on the aimed individual compound] were processed in the following order: Grinding with mortar and pestle, ball milling, annealing at 500 °C for 4 h (heating rate 5 °C min⁻¹), furnace cooling, grinding with mortar and pestle, ball milling, grinding with mortar and pestle, pressing into a pellet, annealing at 900 °C for 6 h (heating rate 5 °C min⁻¹), furnace cooling, grinding with mortar and pestle, screening over a 45 µm sieve. In order to compensate the loss of sodium during the annealing, a ratio of 0.75 equivalents of sodium was used in accordance with previous reports to obtain a finial ratio of about 0.67 equivalents. The final materials were used without further treatment. Following compounds were synthesized:
Samples according the invention: Na_{0.64}Mn_{0.89}B_{0.11}O₂, Na_{2/3}Mn_{0.85}B_{0.15}O₂, Na_{2/3}Mn_{0.83}B_{0.17}O₂, Na_{2/3}Mn_{0.80}B_{0.20}O₂, Na_{2/3}Mn_{0.75}B_{0.25}O₂, Comparative samples Na_{2/3}MnO₂, Na_{2/3}Mn_{0.89}Al_{0.11}O₂, Na_{2/3}Mn_{0.70}B_{0.30}O₂, Na_{2/3}Mn_{0.65}B_{0.35}O₂.

### Material Characterization

The characterization of the structure of the active materials was conducted using X-ray diffraction (XRD, Bruker D8 Advance diffractometer with a CuK_{α} radiation (λ=0.154 nm)) and scanning electron microscopy (SEM, Zeiss Auriga®, samples sputtered with 4 nm of platinum).

### Electrode Preparation

Electrodes were processed by mixing the active material with a polyvinylidene difluoride binder [PVdF, Solef 6020, Arkema, 10 wt.% solution in *N*-Methyl-2-pyrrolidone (NMP), Sigma-Aldrich, anhydrous, 99.5%] and conductive carbon black (CB) (Super C65, IMERYS) in NMP via ball milling. The slurries were casted on aluminium foil (20 µm). The coated foils were predried at 60 °C in air for 24 h. Round disk electrodes (∅=12 mm) were cut, dried at 120 °C under vacuum for 24 h, pressed, dried again for 24 h at 120 °C under vacuum and, finally, stored in an Ar-filled glovebox. The slurry composition was 85 wt.% active material, 10 wt.% carbon black and 5 wt.% binder. The average active material mass loading for sodium metal half-cell tests for the cathode was about 2.5 mg cm⁻².

### Electrolyte preparation

About 1 M NaPF₆ [sodium hexafluorophosphate (Alfa Aesar, 99+ %)] in PC [propylene carbonate (BASF, 99.95%)] was used as electrolyte, which was obtained after mixing a stoichiometric ratio for 1 M of NaPF₆ in PC with following filtration. The filtration was conducted with a 0.45 µm pore size polytetrafluoroethylene syringe filter. The electrolyte preparation and cell assembly were carried out in a glove box (MBraun) with an oxygen and water content below 0.1 ppm.

### Electrochemical Characterization

Galvanostatic cycling tests were carried out on a Maccor battery tester 4300 and cyclic voltammetry on a VMP3 Potentiostat (Biologic). All electrochemical tests were carried out in climatic chambers at a temperature of 20 ± 1 °C.

### Cell assembly

Three-electrode Swagelok® cells were assembled using the appropriate working electrode and sodium metal (99.8%, Acros Organics) as the counter and reference electrodes. Three-electrode cells were used instead of two-electrode cells to avoid the possible influence of the polarization of the sodium metal electrode upon cycling. Thus, all potential values refer to the Na/Na⁺ reference couple. Whatman® GF/D glass fiber separators were used and drenched with 300 µL of electrolyte.

## Claims

1. Secondary cathode material comprising at least one layered sodium transition metal oxide having the formula
NaₓMe1_{y}Me2_{z}B_{b}Oₙ,
wherein 0.5 < x, and
Me1 is Mn or a mixture of Mn and at least one metal taken amongst the elements Fe, Ni, Co and 0.7 ≤ y ≤ 0.97, and
Me2 is at least one metal taken amongst the elements Li, Mg, Al, K, Ca, Ti, Cr, Cu, Zn, Zr, Sn and 0 ≤ z ≤ 0.3, and
0.03 ≤ b < 0.25, and b + z ≤ 0.3, and 1.9 ≤ n ≤ 2.1.

2. Cathode material of claim 1, wherein 0.63 < x.

3. Cathode material of claim 1 or 2, wherein 0.07 ≤ b ≤ 0.225.

4. Cathode material of one of the claims 1 to 3, wherein 0.10 ≤ b ≤ 0.20.

5. Cathode material of one of the claims 1 to 4, wherein y = 1-b.

6. Cathode material of one of the claims 1 to 5, wherein Me2 is Mg, Al, Ca, Ti, Cr, Cu, Zn.

7. A method for preparing a cathode material as claimed in any of the claims 1 to 6 using solid-state, sol-gel or co-precipitation synthesis.

8. Method of claim 7, comprising at least one step of grinding of stoichiometric amounts of the educts to yield a ground material and afterwards heat treatment of the ground material at temperatures between 600 and 1100 °C.

9. Use of the cathode material of any of the claims 1 to 7 in a rechargeable sodium-ion battery.

10. A rechargeable sodium-ion battery comprising at least one anode and at least one cathode, wherein at least one cathode comprises the cathode material of one of the claims 1 to 8.

11. Rechargeable sodium-ion battery of claim 10, wherein the anode comprises a current collector comprising Aluminium.
